# FASCICULE DE BREVET EUROPEEN

(11) **EP 3 983 661 B1**
(45) Date de publication et mention de la délivrance du brevet: **01.03.2023**
(21) Numéro de dépôt: 20743743.5
(22) Date de dépôt: 11.06.2020
(51) Int. Cl.: F02C 3/067, F01D 1/26, F02C 7/18

(54) **DISPOSITIF DE REFROIDISSEMENT D'UN CARTER D'UNE TURBOMACHINE**
VORRICHTUNG ZUR KÜHLUNG DES GEHÄUSES EINER TURBOMASCHINE
DEVICE FOR COOLING A TURBOMACHINE CASING

(30) Priorité: 12.06.2019 FR 1906225
(43) Date de publication de la demande: 20.04.2022
(73) Titulaire: SAFRAN AIRCRAFT ENGINES, 75015 Paris (FR)
(72) Inventeur: DANTENY, Ulysse, Jacques, Bernard, 77550 Moissy-Cramayel (FR); ZAMAI, Laurent, Cédric, 77550 Moissy-Cramayel (FR)
(74) Mandataire: Ernest Gutmann - Yves Plasseraud S.A.S.
(86) Numéro de dépôt international: PCT/FR2020/050999
(87) Numéro de publication internationale: WO 2020/249908

(56) Documents cités:
- FR-A1- 2 955 890
- US-A1- 2013 219 856
- US-A1- 2019 085 710

## Description

### Domaine technique de l'invention

La présente invention concerne un dispositif de refroidissement d'un carter d'une turbomachine, telle par exemple qu'une turbomachine à double flux.

### Etat de la technique antérieure

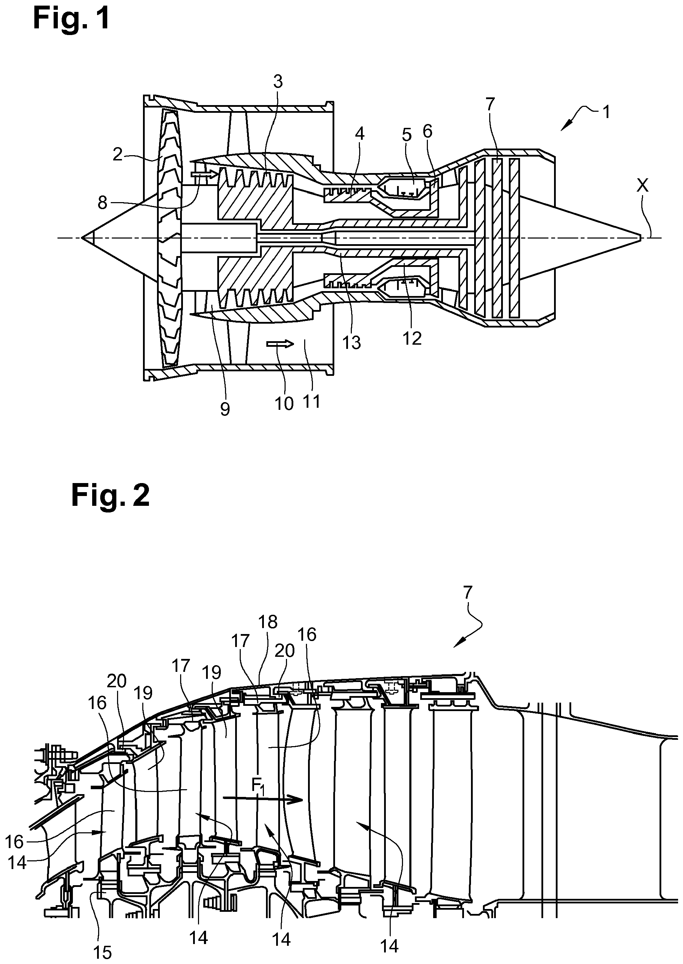

La figure 1 représente une turbomachine 1 à double flux et à double corps. L'axe de la turbomachine est référencé X et correspond à l'axe de rotation des parties tournantes. Dans ce qui suit, les termes axial et radial sont définis par rapport à l'axe X.

La turbomachine 1 comporte, de l'amont vers l'aval dans le sens d'écoulement des gaz, une soufflante 2, un compresseur basse pression 3, un compresseur haute pression 4, une chambre de combustion 5, une turbine haute pression 6 et une turbine basse pression 7. L'air issu de la soufflante 2 est divisé en un flux primaire 8 s'écoulant dans une veine annulaire primaire 9, et un flux secondaire 10 s'écoulant dans une veine annulaire secondaire 11 entourant la veine annulaire primaire 10.

Le compresseur basse pression 3, le compresseur haute pression 4, la chambre de combustion 5, la turbine haute pression 6 et la turbine basse pression 7 sont ménagés dans la veine primaire 9.

Le rotor de la turbine haute pression 6 et le rotor du compresseur haute pression 4 sont couplés en rotation par l'intermédiaire d'un premier arbre 12 de manière à former un corps haute pression.

Le rotor de la turbine basse pression 7 et le rotor du compresseur basse pression 3 sont couplés en rotation par l'intermédiaire d'un second arbre 13 de manière à former un corps basse pression, la soufflante 2 pouvant être reliée directement au rotor du compresseur basse pression 3 ou bien par l'intermédiaire d'un train d'engrenage épicycloïdal par exemple. Comme cela est mieux visible à la figure 2, la turbine basse-pression 7 comporte en particulier différents étages successifs comportant des roues mobiles 14 et des parties fixes. La roue mobile comporte un disque 15 au niveau duquel sont montées des aubes 16. Les extrémités des aubes 16 sont entourées d'un anneau fixe 17 en matériau abradable, ledit anneau 17 étant fixé sur le carter 18 de la turbine. Des distributeurs 19 sont situés en aval des roues mobiles 14. Les distributeurs 19 et les anneaux 17 sont montés sur le carter par l'intermédiaire de brides ou de crochets 20 s'étendant depuis la surface radialement interne du carter 18.

Afin de garantir un rendement élevé de la turbomachine, il convient de limiter le flux d'air ne traversant pas les roues mobiles 14 des différents étages, c'est-à-dire de limiter les fuites entre les extrémités radialement externes des aubes 16 et l'anneau 17 en matériau abradable. Pour cela, il convient de contrôler le jeu au niveau de cette interface, ce jeu étant dépendant de la température du carter 18, et notamment des zones dudit carter 18 comportant les crochets ou brides 20 supportant l'anneau 17.

Le flux d'air primaire issu de la chambre de combustion 5 présente une température élevée et échauffe les parties situées en aval, telles que les parties fixes et mobiles de la turbine 6, 7.

Afin de maîtriser le jeu précité et d'éviter toute dégradation prématurée des différentes parties fixes et mobiles de la turbine, il est nécessaire de prévoir des moyens de refroidissement efficaces pouvant s'intégrer aisément dans l'environnement de la turbomachine.

La demande de brevet US2013/219856 A1 divulgue une turbine pour une turbomachine selon les caractéristiques du préambule de la revendication 1.

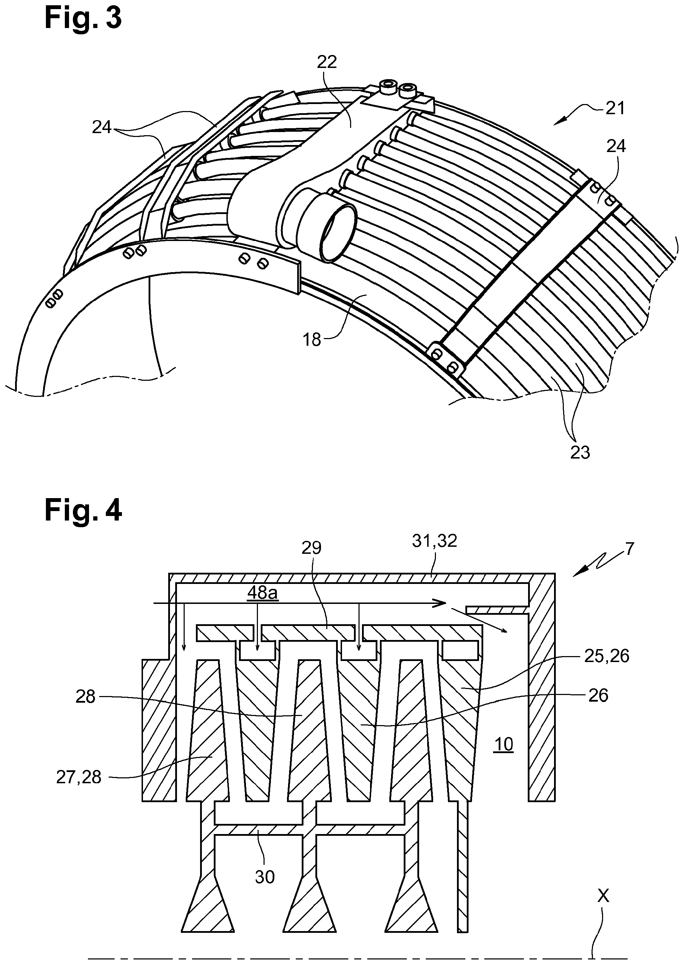

La demande de brevet FR 3 021 700, au nom de la Demanderesse, divulgue un dispositif de refroidissement 21 d'un carter 18 de turbine basse pression 7, visible à la figure 3, comportant des boîtiers collecteurs 22 fixés sur un carter fixe de la turbomachine, chaque boîtier collecteur 22 formant un canal s'étendant axialement.

Le dispositif 21 comporte de plus des tubes 23, également appelées rampes, s'étendant circonférentiellement de part et d'autre des boîtiers collecteurs 22. Chaque tube 23 comporte une entrée d'air débouchant dans le canal du boîtier collecteur 22 et des orifices d'éjection d'air tournés vers le carter 18, de sorte que de l'air de refroidissement puisse pénétrer dans les boîtiers collecteurs 22 puis dans les tubes 23 avant de déboucher par les orifices en regard du carter 18, de manière à le refroidir. On parle notamment de refroidissement par impact puisque l'air vient impacter le carter 18. Un tel dispositif est connu sous la dénomination LPTACC (pour « Low Pressure Turbine Active Clearance Control »).

De récents développements ont conduit à l'élaboration de turbines dites contrarotatives. Une telle turbine comporte un premier rotor comportant un ou plusieurs étages formés par des roues aubagées, tournant autour de l'axe X de la turbomachine dans un premier sens de rotation, et un second rotor comportant un ou plusieurs étages formés par des roues aubagées, tournant autour de l'axe X dans un second sens de rotation, opposé au premier sens de rotation.

Le premier rotor comporte un tambour radialement externe, à partir duquel des aubes s'étendent radialement vers l'intérieur. Le second rotor comporte un tambour radialement interne, à partir duquel des aubes s'étendent radialement vers l'extérieur.

Il convient d'assurer un refroidissement des rotors, en particulier du tambour radialement externe du premier rotor.

Il s'avère qu'il n'est pas pertinent d'utiliser un dispositif de refroidissement de type LPTACC tel que décrit ci-dessus. En effet, l'utilisation de rampes fixes pour refroidir par impact un tambour tournant n'est pas efficace car, lors de la rotation du tambour, une couche d'air limite entoure le tambour, le flux d'air issu des orifices des rampes étant cisaillé par la rotation du tambour et par ladite couche limite, réduisant fortement l'efficacité du refroidissement.

L'invention vise ainsi à répondre aux besoins de refroidissement dans le cas d'une turbine de type contrarotative.

### Présentation de l'invention

A cet effet, l'invention concerne une turbine pour une turbomachine comportant un premier rotor et un second rotor aptes à pivoter autour d'un axe selon deux sens de rotation opposés, le premier rotor comportant un tambour radialement externe à partir duquel des aubes s'étendent radialement vers l'intérieur, caractérisée en ce qu'elle comporte des moyens de refroidissement fixes par rapport au tambour externe, lesdits moyens de refroidissement comportant une tôle support comprenant au moins un premier orifice et une tôle de calibration fixée sur la tôle support et située radialement à l'intérieur de la tôle support, la tôle de calibration comprenant au moins un second orifice de calibration tourné vers le tambour externe de manière à permettre le passage d'air de refroidissement radialement de l'extérieur vers l'intérieur au travers des premier et second orifices.

De cette manière, de l'air issu par exemple du compresseur haute pression, peut être amené vers un espace annulaire d'arrivée d'air situé radialement à l'extérieur de la tôle support puis traverser, radialement de l'extérieur vers l'intérieur, la tôle support et la tôle de calibration, au travers respectivement du premier orifice et du second orifice, avant de refroidir par impact le tambour externe du premier rotor.

Les moyens de refroidissement étant fixes par rapport au premier rotor, l'air venant impacter le tambour externe du premier rotor n'est pas cisaillé par la rotation du premier rotor comme dans le cas de l'art antérieur, ce qui permet d'assurer un refroidissement efficace.

Les termes axial, radial et circonférentiel sont définis par rapport à l'axe de rotation, qui correspond à l'axe de la turbine.

L'espace annulaire d'arrivée d'air peut être délimité entre un carter fixe et la tôle support.

La section totale du ou des premiers orifices peut être supérieure à la section totale du ou des seconds orifices.

En d'autres termes, le débit d'air est limité, non pas par la section des premiers orifices, mais par la section des seconds orifices.

La tôle de calibration peut délimiter avec la tôle support au moins une chambre intermédiaire dans laquelle débouchent les premier et second orifices.

La chambre intermédiaire forme une chambre de tranquillisation. Pour chaque chambre intermédiaire, la section totale du ou des premiers orifices débouchant dans la chambre intermédiaire est supérieure à la section totale du ou des seconds orifices débouchant dans la même chambre intermédiaire.

La turbine peut comporter plusieurs chambres intermédiaires, les différentes chambres intermédiaires ne communiquent pas directement entre elles et sont indépendantes les unes des autres. Les différentes chambres intermédiaires peuvent être décalées circonférentiellement et/ou axialement. Plusieurs chambres intermédiaires peuvent être délimitées par une même tôle de calibration.

La chambre intermédiaire peut présenter une section de forme générale trapézoïdale.La tôle de calibration peut être fixée par soudage ou brasage à la tôle support.

La chambre intermédiaire peut être étanche aux gaz, à l'exception des premier et second orifices.

La turbine peut comporter au moins deux tôles de calibration décalées axialement l'une de l'autre et fixées sur la tôle support.

Chaque tôle de calibration peut délimiter une ou plusieurs chambres intermédiaires.

Le tambour externe peut comporter des orifices traversant débouchant en regard des aubes du premier rotor.

De cette manière, l'air ayant impacté le tambour externe est ensuite dirigé, au moins en partie, en regard des aubes du premier rotor, par exemple en regard des plates-formes radialement externes des aubes, au travers des orifices du tambour externe, de manière à assurer le refroidissement desdites aubes. L'air traversant ces orifices permet également de refroidir davantage le tambour externe, en particulier, plus qu'avec un simple impact de jet. L'extrémité aval et/ou l'extrémité amont de la tôle support peut être fixée par vissage ou rivetage sur le tambour externe.

L'extrémité aval de la tôle support peut comporter un rebord radial, fixé sur une bride radiale du tambour.

Le rebord radial peut s'étendre radialement vers l'intérieur ou radialement vers l'extérieur depuis l'extrémité correspondante de la tôle support.

L'extrémité amont et/ou l'extrémité aval de la tôle support est maintenue radialement par rapport au tambour externe, ladite extrémité étant apte à translater axialement par rapport au tambour externe.

Une telle translation autorise d'éventuels déplacements en fonctionnement, notamment en cas de dilatations axiales différentielles entre la tôle support et le tambour externe.

Ladite extrémité de la tôle support peut être maintenue par l'intermédiaire d'un organe de maintien fixé sur le tambour externe, l'organe de maintien comportant une partie de fixation radiale et une partie de maintien axiale, ladite extrémité de la tôle support étant montée radialement dans un espace ménagé entre le tambour externe et la partie de maintien.

Un joint ou un organe élastique peut être monté axialement entre la partie de fixation de l'organe de maintien et l'extrémité axiale correspondante de la tôle support.

Le second rotor peut comporter un tambour radialement interne à partir duquel des aubes s'étendent radialement vers l'extérieur.

L'un au moins des rotors peut comporter plusieurs étages de turbine, chaque étage étant formé par une roue aubagée comportant une pluralité d'aubes réparties sur la circonférence. L'invention concerne également une turbomachine, caractérisée en ce qu'elle comporte au moins une turbine du type précité.

La turbomachine peut comporter, d'amont en aval dans le sens de circulation des gaz au sein de la turbomachine, une soufflante, un compresseur basse pression, un compresseur haute pression, une chambre de combustion, une turbine haute pression et une turbine basse pression, la turbine basse pression étant une turbine selon l'invention.

La turbomachine peut comporter des moyens d'amenée d'un flux d'air de refroidissement dans la turbine basse pression, le flux d'air de refroidissement étant prélevé au niveau du compresseur haute pression et étant amené dans un espace annulaire situé radialement à l'extérieur de la tôle support.

De cette manière, la pression de l'air de refroidissement est supérieure à la température des gaz dans la veine de la turbine basse pression. La veine est délimitée entre les tambours des premier et second rotors. On évite ainsi un refoulement des gaz chauds issus de la veine hors de la veine, au travers des orifices des tôles de calibrage et de support.

### Brève description des figures

[Fig. 1] est une vue schématique en coupe axiale d'une turbomachine de l'art antérieur,
[Fig. 2] est une demie-vue en coupe axiale d'une turbine de l'art antérieur,
[Fig. 3] est une vue en perspective d'un dispositif de refroidissement de l'art antérieur,
[Fig. 4] est une vue demie-vue schématique et en coupe axiale d'une turbine basse pression contra rotative,
[Fig. 5] est une vue en coupe axiale d'une partie d'une turbine selon une première forme de réalisation de l'invention,
[Fig. 6] est une vue de détail d'une partie de la figure 5,
[Fig. 7] est une vue correspondant à la figure 5, illustrant une deuxième forme de réalisation de l'invention,
[Fig. 8] est une vue correspondant à la figure 5, illustrant une troisième forme de réalisation de l'invention.

### Description détaillée de l'invention

Les figures 4 à 6 illustrent une turbine basse pression 7 de turbomachine conformément à une première forme de réalisation de l'invention.

La turbine 7 est de type contrarotative et comporte un premier rotor 25 comportant un ou plusieurs étages formés par des roues aubagées 26, tournant autour de l'axe X de la turbine 7 dans un premier sens de rotation, et un second rotor 27 comportant un ou plusieurs étages 28 formés par des roues aubagées, tournant autour de l'axe X dans un second sens de rotation, opposé au premier sens de rotation.

Le premier rotor 25 comporte un tambour radialement externe 29, à partir duquel des aubes 26 s'étendent radialement vers l'intérieur. Le second rotor 27 comporte un tambour radialement interne 30, à partir duquel des aubes 28 s'étendent radialement vers l'extérieur. Les rotors 25, 27 sont logés dans un carter fixe 31, ledit carter 31 comportant en particulier une paroi annulaire radialement externe 32.

Comme indiqué précédemment, il convient d'assurer un refroidissement des rotors 25, 27, en particulier du tambour radialement externe 29 du premier rotor 25.

Pour cela, la turbine 7 comporte des moyens de refroidissement 33 fixes par rapport au tambour externe 29, lesdits moyens de refroidissement 33 comportant une tôle support 34 de forme annulaire.

La tôle support 34 est annulaire et présente, de l'amont vers l'aval, une bride radiale 35, une partie tronconique 36 s'évasant vers l'aval, une partie cylindrique 37 et une bride radiale 38. Les brides 35, 38 forment les extrémités amont et aval de la tôle support 34 et s'étendent radialement vers l'extérieur depuis la partie tronconique 36 et depuis la partie cylindrique 37. Chaque bride 35, 38 est fixée à un rebord radial 39 du tambour externe 29 ou d'une partie reliée au premier rotor 25.

La tôle support 34 comporte des premiers orifices 40 répartis par rangées décalées axialement les unes des autres. Les premiers orifices 40 d'une même rangée sont régulièrement répartis sur la circonférence de la tôle de support 34. Les premiers orifices 40 présentent chacun une section circulaire. Les axes des premiers orifices 40 sont perpendiculaires à leur zone d'implantation dans la partie tronconique 36 ou dans la partie cylindrique 37 de la tôle support 34.

Les moyens de refroidissement 33 comprennent en outre des tôles de calibration 41 fixées sur la tôle support 34. Les tôles de calibration 41 sont annulaires et sont décalées axialement les unes des autres. Chaque tôle de calibration 41 comporte deux extrémités axiales 42 fixées de manière étanche, par exemple par soudage ou brasage, à la tôle support 34, et au moins une partie médiane 43 écartée radialement vers l'intérieur par rapport à la tôle support 34. La partie médiane 43 est tronconique ou cylindrique, et coaxiale avec la partie tronconique 36 ou cylindrique 37 de la tôle support 34 sur laquelle elle est fixée. La tôle de calibration 41 peut comporter une ou plusieurs parties médianes 43 distinctes, écartées l'une de l'autre axialement, et écartées de la tôle support 34. Dans ce cas, deux parties médianes sont séparées par une partie de fixation 44 fixées par soudage ou brasage à la tôle support 34.

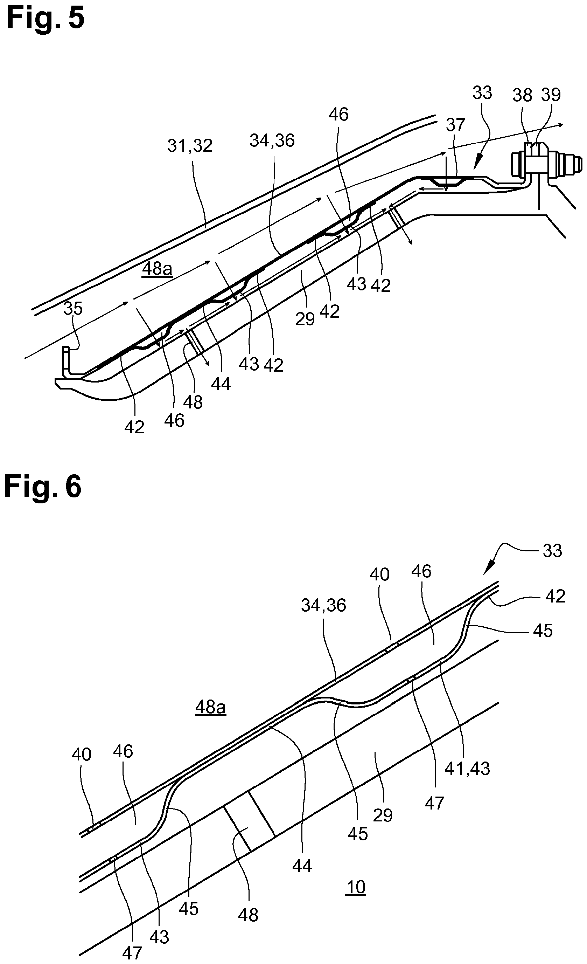

Chaque zone médiane 43 est reliée aux extrémités 42 ou à la partie de fixation 44 par des zones de liaison 45 (figure 6). La distance entre la zone médiane 43 et la face radialement externe du tambour externe 29 peut être comprise en 1 et 10 mm.

Chaque tôle de calibration 41 est annulaire et délimite ainsi un ou plusieurs espaces annulaires intermédiaires 46 ou de tranquillisation avec la tôle support 34, les espaces intermédiaires 46 présentant une section de forme générale trapézoïdale. Chaque espace intermédiaire est délimité par la tôle support 34, la partie médiane 43 et les parties de liaison 45 correspondantes.

Des seconds orifices 47 sont ménagés dans chaque zone médiane 43 de chaque tôle de calibration 41. Les seconds orifices 47 sont agencés sous la forme d'au moins une rangée. Les seconds orifices 47 au sein d'une même rangée sont régulièrement répartis sur la circonférence de la tôle de calibration 41. Les seconds orifices 47 présentent chacun une section circulaire.

Le diamètre des seconds orifices 47 est inférieur au diamètre des premiers orifices 40. Le diamètre des premiers orifices 40 est par exemple compris entre 0.1 et 10 mm. Le diamètre des seconds orifices 47 est par exemple compris entre 0.1 et 10 mm.

Les axes des seconds orifices 47 sont perpendiculaires à leur zone d'implantation dans la partie médiane 43 tronconique ou cylindrique de la tôle de calibration 41 correspondante. Les seconds orifices 47 peuvent être situés en regard des premiers orifices 40 correspondants. Chaque second orifice 47 peut être coaxial avec un premier orifice 40.

Le tambour externe 29 comporte par ailleurs des troisièmes orifices 48 traversant, reliant l'espace annulaire 48 situé entre le carter 31 et la tôle de support 34, d'une part, et l'espace radialement interne au tambour externe 29 formant la veine primaire 10, d'autre part. Les troisièmes orifices 48 sont situés en regard des plates-formes radialement externes des aubes 26 du premier rotor 25, lesdites aubes 26 n'étant pas représentées sur les figures 5 à 8.

En fonctionnement, de l'air de refroidissement est prélevée au niveau du compresseur haute pression 4 de la turbomachine 1 et est amené dans l'espace annulaire 48 ménagé entre le carter 31 et la tôle support 34. Cet air de refroidissement est à une pression supérieure à la pression des gaz au sein de la veine primaire 10 de la turbine 7.

Comme cela est illustré par des flèches sur la figure 5, cet air traverse ensuite successivement les premiers orifices 40, les chambres intermédiaires 46 et les seconds orifices 47 avant de venir impacter la surface radialement externe du tambour externe 29, de manière à le refroidir. Cet air de refroidissement traverse ensuite les troisièmes orifices 48 de façon à refroidir les aubes 26, avant d'être évacué dans la veine 10 de la turbine 7.

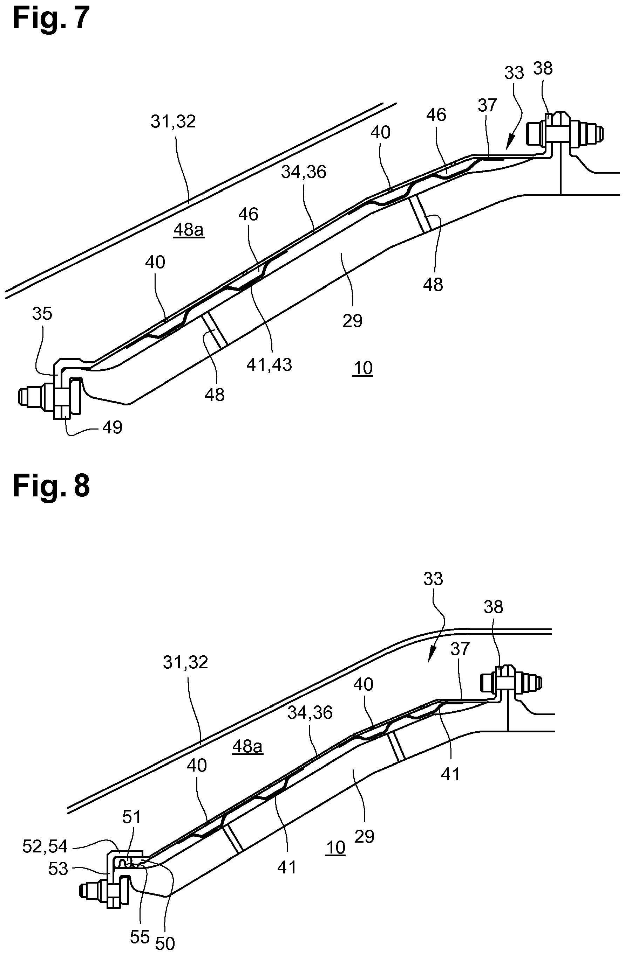

La figure 7 illustre une deuxième forme de réalisation de l'invention, qui diffère de celle exposée en référence aux figures 4 à 6 en ce que le rebord radial 35 de l'extrémité amont de la tôle support 34 s'étend radialement vers l'intérieur depuis la partie tronconique 36 et est fixé par vissage à un rebord radial 49 du tambour externe 29.

La figure 8 illustre une troisième forme de réalisation de l'invention, qui diffère de celle exposée en référence à la figure 7 en ce que l'extrémité amont 50 de la tôle support 34 s'étend axialement et est engagée dans un espace annulaire 51 s'étendant axialement, ménagé entre un organe de maintien 52 et l'extrémité amont du tambour externe 29. L'organe de maintien 52 est annulaire. Il comporte une section en L et comprend une partie de fixation 53 radiale et une partie de maintien 54 axiale. L'espace annulaire 51 est délimité entre la partie de maintien 54 et le tambour externe 29.

L'extrémité amont 50 de la tôle support 34 est ainsi maintenue radialement avec un jeu radial faible ou nul dans l'espace annulaire 51 précité, un déplacement axial étant possible entre ladite extrémité amont 50 de la tôle support 34 et le tambour externe 29, de façon à compenser notamment d'éventuels phénomènes de dilatations différentielles en fonctionnement. Le déplacement axial est guidé par un contact plan sur plan entre la surface externe de l'extrémité amont 50 et la surface interne de la partie de maintien 54.

Un joint ou un organe élastique 55 peut être monté axialement entre la partie de fixation 53 de l'organe de maintien 52 et l'extrémité axiale amont 50 de la tôle support 34. Ce joint ou organe élastique est par exemple formé par une tôle ondulée.

## Revendications

1. Turbine (7) pour une turbomachine (1) comportant un premier rotor (25) et un second rotor (27) aptes à pivoter autour d'un axe (X) selon deux sens de rotation opposés, le premier rotor (25) comportant un tambour radialement externe (29) à partir duquel des aubes (26) s'étendent radialement vers l'intérieur, **caractérisée en ce qu'**elle comporte des moyens de refroidissement (33) fixes par rapport au tambour externe (29), lesdits moyens de refroidissement (33) comportant une tôle support (34) comprenant au moins un premier orifice (40) et au moins une tôle de calibration (41) fixée sur la tôle support (34) et située radialement à l'intérieur de la tôle support (34), l'au moins une tôle de calibration (41) comprenant au moins un second orifice (47) de calibration tourné vers le tambour externe (29) de manière à permettre le passage d'air de refroidissement radialement de l'extérieur vers l'intérieur au travers des premier et second orifices (40, 47).

2. Turbine (7) selon la revendication 1, **caractérisée en ce que** la section totale du ou des premiers orifices (40) est supérieure à la section totale du ou des seconds orifices (47).

3. Turbine (7) selon la revendication 1 ou 2, **caractérisée en ce que** chaque tôle de calibration (41) délimite avec la tôle support (34) au moins une chambre intermédiaire (46) dans laquelle débouchent les premier et second orifices (40, 47).

4. Turbine (7) selon la revendication 3, **caractérisée en ce que** la chambre intermédiaire (46) présente une section de forme générale trapézoïdale.

5. Turbine (7) selon la revendication 4, **caractérisée en ce que** chaque tôle de calibration (41) comporte une zone médiane (43) et des zones de fixation (42) fixées à la tôle support (34) de part et d'autre de la zone médiane (43), la zone médiane (43) étant écartée radialement vers l'intérieur par rapport à la tôle support (34).

6. Turbine (7) selon l'une des revendication 1 à 5, **caractérisée en ce qu'**il comporte une pluralité de tôles de calibration (41) décalées axialement l'une de l'autre et fixées sur la tôle support (34).

7. Turbine (7) selon l'une des revendications 1 à 6, **caractérisée en ce que** le tambour externe (29) comporte des orifices (48) traversant débouchant en regard des aubes (26) du premier rotor (25).

8. Turbine (7) selon l'une des revendications 1 à 7, **caractérisée en ce que** l'extrémité aval et/ou l'extrémité amont de la tôle support (34) est fixée par vissage ou rivetage sur le tambour externe (29).

9. Turbine (7) selon l'une des revendications 1 à 8, **caractérisée en ce que** l'extrémité amont (50) et/ou l'extrémité aval de la tôle support (34) est maintenue radialement par rapport au tambour externe (29), ladite extrémité étant apte à translater axialement par rapport au tambour externe (29).

10. Turbomachine (1), **caractérisée en ce qu'**elle comporte au moins une turbine (7) selon l'une des revendications 1 à 9.

## Patentansprüche

1. Turbine (7) für ein Turbotriebwerk (1) mit einem ersten Rotor (25) und einem zweiten Rotor (27), die in zwei entgegengesetzten Drehrichtungen um eine Achse (X) verschwenkbar sind, wobei der erste Rotor (25) eine radial äußere Trommel (29) aufweist, von der aus sich Schaufeln (26) radial nach innen erstrecken,
**dadurch gekennzeichnet, dass** sie Kühlmittel (33) aufweist, die in Bezug auf die äußere Trommel (29) feststehend sind, wobei die Kühlmittel (33) ein Trägerblech (34) mit zumindest einer ersten Öffnung (40) und zumindest ein Kalibrierblech (41) umfassen, das an dem Trägerblech (34) befestigt ist und sich radial innerhalb des Trägerblechs (34) befindet, wobei das zumindest eine Kalibrierblech (41) zumindest eine zweite Öffnung (47) zur Kalibrierung umfasst, die der äußeren Trommel (29) zugewandt ist, so dass sie den Durchtritt von Kühlluft radial von außen nach innen durch die erste und die zweite Öffnung (40, 47) hindurch ermöglicht.

2. Turbine (7) nach Anspruch 1,
**dadurch gekennzeichnet, dass** der Gesamtquerschnitt der ersten Öffnung(en) (40) größer ist als der Gesamtquerschnitt der zweiten Öffnung(en) (47).

3. Turbine (7) nach Anspruch 1 oder 2,
**dadurch gekennzeichnet, dass** jedes Kalibrierblech (41) mit dem Trägerblech (34) zumindest eine Zwischenkammer (46) begrenzt, in die die erste und die zweite Öffnung (40, 47) münden.

4. Turbine (7) nach Anspruch 3,
**dadurch gekennzeichnet, dass** die Zwischenkammer (46) einen trapezförmigen Querschnitt aufweist.

5. Turbine (7) nach Anspruch 4,
**dadurch gekennzeichnet, dass** jedes Kalibrierblech (41) einen Mittelbereich (43) und Befestigungsbereiche (42) aufweist, die auf beiden Seiten des Mittelbereichs (43) an dem Trägerblech (34) befestigt sind, wobei der Mittelbereich (43) radial nach innen von dem Trägerblech (34) beabstandet ist.

6. Turbine (7) nach einem der Ansprüche 1 bis 5,
**dadurch gekennzeichnet, dass** sie eine Vielzahl von Kalibrierblechen (41) aufweist, die axial gegeneinander versetzt und an dem Trägerblech (34) befestigt sind.

7. Turbine (7) nach einem der Ansprüche 1 bis 6,
**dadurch gekennzeichnet, dass** die äußere Trommel (29) Durchgangsöffnungen (48) aufweist, die gegenüber den Schaufeln (26) des ersten Rotors (25) münden.

8. Turbine (7) nach einem der Ansprüche 1 bis 7,
**dadurch gekennzeichnet, dass** das stromabwärtige Ende und/oder das stromaufwärtige Ende des Trägerblechs (34) durch Verschrauben oder Vernieten an der äußeren Trommel (29) befestigt ist.

9. Turbine (7) nach einem der Ansprüche 1 bis 8,
**dadurch gekennzeichnet, dass** das stromaufwärtige Ende (50) und/oder das stromabwärtige Ende des Trägerblechs (34) radial in Bezug auf die äußere Trommel (29) gehalten wird, wobei das Ende in Bezug auf die äußere Trommel (29) axial translatorisch verschiebbar ist.

10. Turbotriebwerk (1),
**dadurch gekennzeichnet, dass** es zumindest eine Turbine (7) nach einem der Ansprüche 1 bis 9 aufweist.

## Claims

1. A turbine (7) for a turbomachine (1) comprising a first rotor (25) and a second rotor (27) capable of pivoting about an axis (X) in two opposite directions of rotation, the first rotor (25) comprising a radially outer drum (29) from which blades (26) extend radially inwards, **characterized in that** it comprises cooling means (33) which are attached with respect to the outer drum (29), said cooling means (33) comprising a support plate (34) comprising at least one first orifice (40) and at least one calibration plate (41) attached to the support plate (34) and located radially inside the support plate (34), the at least one calibration plate (41) comprising at least one second calibration orifice (47) turned towards the outer drum (29) so as to allow the passage of cooling air radially from the outside to the inside through the first and second orifices (40, 47)

2. A turbine (7) according to claim 1, **characterised in that** the total cross-sectional area of the first orifice(s) (40) is greater than the total cross-sectional area of the second orifice(s) (47).

3. A turbine (7) according to claim 1 or 2, **characterised in that** each calibration plate (41) delimits with the support plate (34) at least one intermediate chamber (46) into which the first and second orifices (40, 47) open.

4. A turbine (7) according to claim 3, **characterised in that** the intermediate chamber (46) has a generally trapezoidal cross-section.

5. A turbine (7) according to claim 4, **characterised in that** each calibration plate (41) has a central area (43) and fixing areas (42) attached to the support plate (34) on either side of the central area (43), the central area (43) being spaced radially inwards from the support plate (34).

6. A turbine (7) according to one of claims 1 to 5, **characterised in that** it comprises a plurality of calibration plates (41) axially offset from each other and attached to the support plate (34).

7. A turbine (7) according to one of claims 1 to 6, **characterised in that** the outer drum (29) comprises through orifices (48) opening out opposite the blades (26) of the first rotor (25).

8. A turbine (7) according to one of the claims 1 to 7, **characterised in that** the downstream end and/or the upstream end of the support plate (34) is attached by screwing or riveting to the outer drum (29).

9. A turbine (7) according to one of claims 1 to 8, **characterised in that** the upstream end (50) and/or the downstream end of the support plate (34) is held radially with respect to the outer drum (29), said end being able to translate axially with respect to the outer drum (29).

10. A turbomachine (1), **characterised in that** it comprises at least one turbine (7) according to one of claims 1 to 9.
